# EUROPÄISCHE PATENTSCHRIFT

(11) **EP 2 428 862 B1**
(45) Veröffentlichungstag und Bekanntmachung des Hinweises auf die Patenterteilung: **09.01.2013**
(21) Anmeldenummer: 10009517.3
(22) Anmeldetag: 13.09.2010
(51) Int. Cl.: G05D 1/00, G05D 1/02, G01S 17/93

(54) **Vorrichtung und Verfahren zur Sicherheitssteuerung eines Fahrzeuges**
Device and method for safety control of a vehicle
Dispositif et procédé destinés à la commande de sécurité d'un véhicule

(43) Veröffentlichungstag der Anmeldung: 14.03.2012
(73) Patentinhaber: SICK AG, 79183 Waldkirch/Breisgau (DE)
(72) Erfinder: Erb, Frank, 79211 Denzlingen (DE)
(74) Vertreter: Manitz, Finsterwald & Partner GbR

(56) Entgegenhaltungen:
- DE-A1- 10 258 794
- DE-A1-102005 054 359
- DE-A1-102009 006 256
- DE-U1-202005 004 466
- GB-A- 2 413 449
- CHOON-YOUNG LEE ET AL: "Object recognition algorithm for adaptive cruise control of vehicles using laser scanning sensor", INTELLIGENT TRANSPORTATION SYSTEMS, 2000. PROCEEDINGS. 2000 IEEE OCTOBER 1-3, 2000, PISCATAWAY, NJ, USA,IEEE, 1. Oktober 2000 (2000-10-01), Seiten 305-310, XP010520556, ISBN: 978-0-7803-5971-0

## Beschreibung

Die Erfindung betrifft eine Vorrichtung zur Sicherheitssteuerung eines Fahrzeuges, insbesondere eines fahrerlosen Fahrzeuges, mit wenigstens einem optischen Objektsensor zur Detektion von Objekten in einem Schutzfeld und einer Steuerungseinrichtung zur Auswertung der Signale des wenigstens einen Objektsensors und zur Erzeugung von Steuersignalen für das Fahrzeug, insbesondere von Bremssignalen. Die Erfindung betrifft weiterhin ein Verfahren zur Sicherheitssteuerung eines Fahrzeuges, das mit einer solchen Vorrichtung durchgeführt werden kann.

Zur Steuerung von Fahrzeugen, insbesondere fahrerlosen Transportsystemen, wird der aktuelle Geschwindigkeitsvektor eines Fahrzeugs in zwei oder drei Freiheitsgraden benötigt. Bei bekannten Lösungen kommen zum Beispiel Encoder an den Fahrzeugrädern zum Einsatz, die allerdings nur den Geschwindigkeitsbetrag, nicht aber die Fahrtrichtung sicher messen können. Der Geschwindigkeitsbetrag kann verwendet werden, um aus einer Anzahl von gespeicherten Schutzfeldern ein entsprechendes Schutzfeld auszuwählen. Wenn sich ein Objekt in diesem Schutzfeld befindet, wird ein Signal ausgegeben. Zur Erfüllung von Sicherheitsnormen, wie zum Beispiel der EN 13849 oder der EN 61496, wird bei bekannten Lösungen ein zweiter redundanter Encoder an den Fahrzeugrädern eingesetzt, wobei jeweils der höhere Geschwindigkeitsbetrag der zwei Encoder verwendet wird. Bei diesen Lösungen sind dementsprechend zumindest zwei redundante Encoder notwendig.

Andere bekannte Lösungen verwenden zur Lokalisierung oder zur optischen Geschwindigkeitsmessung Entfernungswerte, die von am Fahrzeug angebrachten Laserscannern gemessen werden.

DE 10 2005 054 359 A1 beschreibt die Berechnung von Fahrtrichtung und Geschwindigkeitsbetrag des Fahrzeuges mittels mehrerer Umgebungsobjekte und einem Laserscanner. Hier wird der aus Fahrtrichtung und Geschwindigkeitsbetrag bestimmte Geschwindigkeitsvektor verwendet, um aus einer Anzahl von gespeicherten Schutzfeldern ein entsprechendes Schutzfeld auszuwählen und ein Signal auszugeben, wenn sich in diesem Schutzfeld ein Objekt befindet.

Zu den einzelnen Geschwindigkeitsvektoren werden zum Beispiel im Rahmen eines Einlernprozesses Schutzfelder bestimmt und abgespeichert. Dazu wird das dynamische Verhalten des Fahrzeuges ausgewertet.

In einem Konzeptpapier "Schutzfeldberechung" des SAMS-Projekts (Sicherungskomponente für autonome mobile Systeme) einer Kooperation des DFKI-Labors Bremen, der Leuze lumiflex und der Universität Bremen ist ein Verfahren zur Vorausberechnung eines dynamischen Schutzfeldes in Abhängigkeit der Fahrtrichtung und des Geschwindigkeitsbetrags (unter Verwendung genau eines Geschwindigkeitsvektors) beschrieben. In dieses Modell geht das Konzeptpapier "Bremsmodell" des SAMS-Projekts (Sicherungskomponente für autonome mobile Systeme) einer Kooperation des DFKI-Labors Bremen, der Leuze lumiflex und der Universität Bremen ein, das das Verhalten eines Fahrzeugs im Falle einer Notbremsung beschreibt. Ein durch das Bundesministerium für Bildung und Forschung im Rahmen des SAMS-Projektes geförderter Forschungsbericht der Deutsches Forschungszentrum für künstliche Intelligenz GmbH vom April 2009 (ISSN 0946-008X: "Verfahren zur Vermeidung von Kollisionen gesteuert beweglicher Teile einer Anlage") beschreibt ein Verfahren, das dazu dient, gesteuerte bewegliche Teile einer Anlage zu überwachen und rechtzeitig einen Halt auszulösen, bevor diese miteinander oder mit der unbeweglichen Umgebung kollidieren. Verwiesen werden kann hierzu auch auf die darin genannte DE 10 2009 006 256 A1, die auf ein darin beschriebenes Verfahren zur Vermeidung von Kollision gesteuert relativ zueinander bewegter Objekte wie Roboterarme oder fahrerloser Transportsysteme gerichtet ist, das Bremswege detailliert mit einbezieht. Aus einer für einen Körper berechneten Bremszone wird ein Schutzfeld berechnet.

Schwierig bei der optischen Geschwindigkeitsmessung mit einem oder mehreren Laserscannern sind Mehrdeutigkeiten in der befahrenen Umgebung. Vor allem lange gerade Gänge haben zum Beispiel in der Regel nur wenige oder gar keine gut messbaren Merkmale in Fahrtrichtung, wodurch der Geschwindigkeitsbetrag schlecht messbar ist. Mehrdeutigkeiten in der umgebenden Szene (Umgebung) können zur Verwendung eines Geschwindigkeitsvektors für die Auswahl des Schutzfeldes führen, der nicht dem tatsächlichen aktuellen Geschwindigkeitsvektor entspricht.

DE 10 2005 054 359 A1 und DE 20 2005 004 466 U1 beschreiben eine Vorrichtung mit den Merkmalen des Oberbegriffes des Anspruches 1.

Aufgabe der vorliegenden Erfindung ist es, eine Vorrichtung und ein Verfahren zur Sicherheitssteuerung eines Fahrzeuges anzugeben, bei denen Mehrdeutigkeiten in der umgebenden Szene die Sicherheit des Fahrzeugbetriebes weniger oder gar nicht beeinflussen.

Diese Aufgabe wird mit einer Vorrichtung zur Sicherheitssteuerung eines Fahrzeuges mit den Merkmalen des Anspruches 1 bzw. einem Verfahren zur Sicherheitssteuerung eines Fahrzeuges mit den Merkmalen des Anspruches 11 gelöst. Anspruch 9 ist auf ein Fahrzeug mit einer erfindungsgemäßen Sicherheitssteuerung gerichtet. Unteransprüche sind jeweils auf bevorzugte Ausführungsformen gerichtet.

Bei einer erfindungsgemäßen Vorrichtung zur Sicherheitssteuerung eines Fahrzeuges weist die Steuerungseinrichtung insbesondere eine Bestimmungseinheit zur Bestimmung von denjenigen möglichen Geschwindigkeitsvektoren des Fahrzeuges auf, deren Wahrscheinlichkeit größer als ein Grenzwert ist, die also mit einer gewissen Wahrscheinlichkeit dem tatsächlichen Geschwindigkeitsvektor entsprechen. Zu diesen so bestimmten möglichen Geschwindigkeitsvektoren werden mit Hilfe einer erfindungsgemäß vorgesehenen Auswahleinheit Einzelschutzfelder ausgewählt, die zu diesen Geschwindigkeitsvektoren zum Beispiel in einem Speicher abgespeichert sind. Solche Einzelschutzfelder können zum Beispiel in einem Einlemprozess dimensioniert, festgelegt und abgespeichert worden sein, bei dem das dynamische Verhalten des Fahrzeuges bei Annahme einer Bewegung entsprechend dem Geschwindigkeitsvektor derart berücksichtigt wird, dass beim Eindringen eines Objektes in das Einzelschutzfeld noch ein sicheres Anhalten oder Ausweichen möglich ist.

In einer Schutzfeldbildungseinheit der Steuerungseinrichtung wird aus den so ausgewählten Einzelschutzfeldern ein Schutzfeld gebildet, das vorzugsweise der Einhüllenden der Einzelschutzfelder entspricht. Eine Signalerzeugungseinrichtung erzeugt ein Schaltsignal, wenn in dem so gebildeten Schutzfeld ein Objekt detektiert wird.

Die erfindungsgemäße Vorrichtung zeichnet sich also dadurch aus, dass nicht grundsätzlich der wahrscheinlichste Geschwindigkeitsvektor zur Auswahl und Festlegung des Schutzfeldes verwendet wird, sondern eine Anzahl von Geschwindigkeitsvektoren, die mit einer gewissen Wahrscheinlichkeit dem tatsächlichen Geschwindigkeitsvektor entsprechen. Ergibt sich zum Beispiel bei einer Auswertung der Umgebung mit Hilfe eines Laserscanners, dass zwei unterschiedliche Geschwindigkeitsvektoren mit einer gleich großen Wahrscheinlichkeit dem aktuellen, aber unbekannten Geschwindigkeitsvektor entsprechen, werden Einzelschutzfelder zu beiden dieser Geschwindigkeitsvektoren ausgewählt und durch Bilden der Einhüllenden über diese Einzelschutzfelder ein gesamtes Schutzfeld bestimmt. Derartige Mehrdeutigkeiten führen also nicht zur gefährlichen Auswahl eines falschen Geschwindigkeitsvektors, nur weil sich aus der Umgebungsmessung dieser Geschwindigkeitsvektor als sehr wahrscheinlich ergeben hat, obwohl er nicht dem aktuellen Geschwindigkeitsvektor entspricht.

Ein Schaltsignal wird immer dann erzeugt, wenn in dem aus den Einzelschutzfeldern zusammengesetzten Schutzfeld ein Objekt detektiert wird. Dieses Schaltsignal kann abhängig von der Geometrie der Umgebung zum sofortigen Abbremsen des Fahrzeuges oder zu einem Umlenken verwendet werden.

Nachdem der aktuelle, aber unbekannte Geschwindigkeitsvektor und das ihm zugeordnete Einzelschutzfeld in der Einhüllenden der Einzelschutzfelder mit großer Wahrscheinlichkeit enthalten ist, ist die so ausgestaltete Vorrichtung zur Sicherheitssteuerung eines Fahrzeuges besonders sicher. Auch bei Mehrdeutigkeiten in der Umgebung ist das System sicher. Zwar vergrößert sich bei Verwendung der erfindungsgemäßen Vorrichtung das Schutzfeld. Insbesondere bei Verwendung in Umgebungen mit langen Gängen mit nur wenigen unterscheidbaren Elementen ist allerdings die Fahrtrichtung an sich bereits gut messbar und nur der Geschwindigkeitsbetrag in Fahrtrichtung schwer messbar. Das Schutzfeld dehnt sich dann bei einer erfindungsgemäßen Vorrichtung zur Sicherheitssteuerung dementsprechend im Wesentlichen nur in Fahrtrichtung und nicht zur Seite aus, sodass die Verfügbarkeit des Systems trotz der Vergrößerung des Schutzfeldes erhalten bleibt. In Umgebungen mit vielen unterscheidbaren Merkmalen (also zum Beispiel am Ende eines langen Ganges) weist die Umgebung wieder viele unterscheidbare Merkmale auf, die zur Bestimmung der Fahrtrichtung und des Geschwindigkeitsbetrages ausgewertet werden können, sodass der Geschwindigkeitsvektor mit großer Genauigkeit bestimmt werden kann und das Schutzfeld auch bei einer erfindungsgemäßen Vorrichtung zur Sicherheitssteuerung eines Fahrzeuges nicht oder nur wenig größer ist als wenn nur ein einzelner Geschwindigkeitsvektor ausgewählt werden würde, wie es im Stand der Technik beschrieben ist.

Die Steuerungseinrichtung zur Auswertung der Signale des wenigstens einen Objektsensors kann integraler Bestandteil eines Objektsensors sein oder gesondert in oder an dem Fahrzeug vorgesehen sein.

Eine bevorzugte Ausführungsform der erfindungsgemäßen Vorrichtung weist als Objektsensor wenigstens einen Scanner auf, der die Umgebung in zumindest zwei Raumrichtungen in an sich bekannter Weise abscannt. Entfernungsinformation kann zum Beispiel in an sich bekannter Weise nach dem Time-of-flight-Verfahren, d.h. durch Auswertung der Laufzeit von Laserpulsen bestimmt werden, die von dem Scanner in den Scanbereich gesendet werden.

Mögliche Geschwindigkeitsvektoren können bei einem solchen System gebildet werden, indem die Quotienten aus der Differenz zweier jeweiliger Ortsmessungen eines detektierten Objektes im Scanbereich des Scanners und der Zeit zwischen diesen zwei Ortsmessungen gebildet werden. Auf diese Weise können durch Auswertung verschiedener Gegenstände in der Umgebung von einem Scanner Geschwindigkeitsvektoren bestimmt werden, die mit einer gewissen Wahrscheinlichkeit dem tatsächlichen Geschwindigkeitsvektor entsprechen.

Die Bestimmung der Wahrscheinlichkeit, mit der ein möglicher Geschwindigkeitsvektor dem aktuellen Geschwindigkeitsvektor entspricht, kann außerdem zum Beispiel berücksichtigen, ob für die Bewegung des Fahrzeuges Zwangsbedingungen vorliegen, die bei Zugrundelegen der bekannten bisherigen Bewegung die mögliche zukünftige Bewegung des Fahrzeuges einschränken. So kann es zum Beispiel sein, dass die Geschwindigkeiten in zwei Raumrichtungen nicht unabhängig voneinander sind. Dies ist zum Beispiel bei nicht-holonomen Systemen der Fall, bei denen sich zum Beispiel das Rad eines Fahrzeugs ohne zu gleiten auf einer ebenen Kreisbahn bewegt. So kann zum Beispiel nur eine Abweichung von dem bisherigen Geschwindigkeitsvektor möglich sein, die mit dem mechanisch begrenzten Lenkeinschlag des Fahrzeuges denkbar ist. Zur Berücksichtigung derartiger Zwangsbedingungen kann die Steuerungseinrichtung einer erfindungsgemäßen Vorrichtung entsprechend ausgestaltet bzw. programmiert sein.

Bei der Auswahl der möglichen Geschwindigkeitsvektoren können bei einer bevorzugten Ausgestaltung zum Beispiel auch nur solche Geschwindigkeitsvektoren berücksichtigt werden, deren Wahrscheinlichkeit sich durch weniger als einen Wert von der Wahrscheinlichkeit des wahrscheinlichsten Geschwindigkeitsvektors unterscheiden, der sich zum Beispiel aus einem festen Wert im Prozentbereich bestimmt.

Dies gibt ein auf einfache Weise abprüfbares Kriterium als Grenzwert für die Auswahl der als "möglich" zu klassifizierenden Geschwindigkeitsvektoren.

Bei einer besonders vorteilhaften Weiterbildung einer erfindungsgemäßen Vorrichtung weist die Steuerungseinrichtung eine zweite Auswahleinheit auf, die zur Auswahl von Einzelwarnfeldern ausgestaltet ist, die zu den möglichen Geschwindigkeitsvektoren zum Beispiel in einem Speicher abgespeichert sind. Eine Warnfeldbildungseinheit dient der Bildung eines Warnfeldes aus den Einzelwarnfeldern, wiederum vorzugsweise durch Bildung der Einhüllenden. Eine Warnsignalerzeugungseinrichtung dient der Erzeugung eines Warnsignals, wenn in dem Warnfeld ein Objekt detektiert wird. Mit einer solchen Weiterbildung ist zusätzlich zur Abschaltung bei Eindringen eines Objektes in das Schutzfeld eine Warnfunktion möglich, wenn ein Objekt zwar noch nicht in das Schutzfeld eingedrungen ist, jedoch bereits in einem größeren Warnfeld detektiert wird.

Die zweite Auswahleinheit kann dabei als Teil der Auswahleinheit zur Auswahl der Einzelschutzfelder ausgestaltet sein. Insbesondere kann eine solche, beide Funktionen erfüllende Auswahleinheit nach der Bestimmung der möglichen Geschwindigkeitsvektoren durch die erfindungsgemäße Bestimmungseinheit gleichzeitig die zu den möglichen Geschwindigkeitsvektoren gehörenden Einzelschutzfelder und Einzelwarnfelder auswählen.

Die Erfindung umfasst auch Ausführungsformen, bei denen auf die beschriebene Weise mehrere Schutzfelder und ggf. mehrere Warnfelder vorgesehen sind, die entweder unterschiedliche räumliche Bereiche abdecken oder unterschiedliche Sicherheitsstufen berücksichtigen.

Die Erfindung ist außerdem auf ein Fahrzeug mit einer erfindungsgemäßen Vorrichtung zur Sicherheitssteuerung gerichtet. Eine Ausgestaltung eines erfindungsgemäßen Fahrzeuges sieht vor, dass sich das Schutzfeld zumindest vor dem Fahrzeug erstreckt, sodass bei Eindringen eines Objektes in das Schutzfeld ein entsprechender Bremsvorgang ausgelöst werden kann.

Bei einem erfindungsgemäßen Verfahren zur Sicherheitssteuerung eines Fahrzeuges werden mögliche Geschwindigkeitsvektoren bestimmt, deren Wahrscheinlichkeit größer ist als ein Grenzwert. Zur Bestimmung der möglichen Geschwindigkeitsvektoren können zum Beispiel Scannermessungen der Umgebung eingesetzt werden. Zu diesen möglichen Geschwindigkeitsvektoren werden die Einzelschutzfelder aus einer Gesamtheit von abgespeicherten Einzelschutzfeldern ausgewählt, die zu diesen Geschwindigkeitsvektoren gehören. Diese Einzelschutzfelder berücksichtigen insbesondere den Bremsweg bei Annahme einer Fahrzeugbewegung entsprechend dem jeweiligen Geschwindigkeitsvektor in einer Weise, dass das Schutzfeld ausreichend groß ist, dass ein sicherer Bremsvorgang möglich ist, wenn ein Objekt in das Schutzfeld eindringt.

Die Einzelschutzfelder der möglichen Geschwindigkeitsvektoren werden verwendet um ein gesamtes Schutzfeld zusammenzustellen. Vorzugsweise wird dies durch Bilden der Einhüllenden der Einzelschutzfelder vorgenommen.

Wenn in dem so gebildeten Schutzfeld ein Objekt detektiert wird, wird ein Schaltsignal, zum Beispiel ein Bremssignal oder ein Ausweichsignal für das Fahrzeug generiert.

Besondere Ausgestaltungen des erfindungsgemäßen Verfahrens, die Vorteile des erfindungsgemäßen Verfahrens und der besonderen Ausgestaltungen ergeben sich analoger Weise aus der obigen Schilderung der besonderen Ausführungsformen der erfindungsgemäßen Vorrichtung, ihrer Vorteile und der Vorteile ihrer besonderen Ausführungsformen.

Die Erfindung wird anhand eines Ausführungsbeispiels im Detail erläutert, wobei auf die anliegenden schematischen Figuren Bezug genommen wird. Dabei zeigen
Fig. 1 in schematischer Darstellung ein fahrerloses Transportsystem,
Fig. 2 eine mögliche Wahrscheinlichkeitsverteilung für den Geschwindigkeitsvektor,
Fig. 3 ein Diagramm für die wahrscheinlichen Geschwindigkeitsvektoren,
Fig. 4a eine schematische Darstellung des fahrerlosen Transportsystems und mehrerer Einzelschutzfelder, und
Fig. 4b eine schematische Darstellung des fahrerlosen Transportsystems mit einem gesamten Schutzfeld.

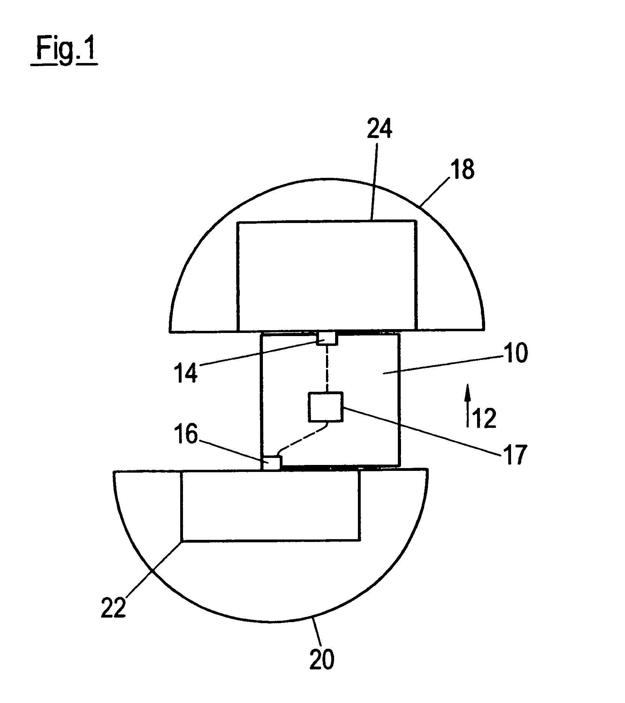

Fig. 1 zeigt ein fahrerloses Transportsystem 10, das sich im Wesentlichen in der Richtung 12 bewegt. Bei dem gezeigten Beispiel befindet sich an der Frontseite des fahrerlosen Transportsystems 10 ein Laserscanner 14, der einen Scanbereich 18 vor dem sich bewegenden fahrerlosen Transportsystem 10 in an sich bekannter Weise abscannt. Ein weiterer Laserscanner 16 befindet sich bei diesem Beispiel an einer Ecke der Rückseite des fahrerlosen Transportsystems 10 und scannt einen Scanbereich 20 ab. Die abzuscannenden Bereiche werden je nach Anforderungen und zu befahrender Geometrie festgelegt.

In noch zu beschreibender Weise wird ein Schutzfeld 24 innerhalb des vorderen Scanbereiches 18 und ein Schutzfeld 22 innerhalb des hinteren Scanbereiches 20 gebildet. Die rechteckige Form dieser Schutzfelder 22 und 24 ist nur schematisch zu verstehen und kann abweichen, wie im Folgenden noch erläutert werden wird.

Bei einer nicht gezeigten Ausführungsform ist jeweils nicht nur ein Scanner 14 und 16 vorgesehen, sondern mehrere Scanner, die redundante Messungen liefern können. Bei einer weiteren, nicht gezeigten Ausführungsform ist nur entweder der Scanner 14 oder der Scanner 16 verwirklicht.

In dem fahrerlosen Transportsystem 10 befindet sich eine Steuerungseinrichtung 17, die zum Beispiel einen Mikroprozessor und eine Speichereinrichtung umfasst. Die Steuerungseinrichtung wertet die Signale der Scanner 14 und 16 aus und erzeugt gegebenenfalls Signale zur Einleitung eines Bremsvorganges, eines Ausweichvorganges oder eines Warnsignals für das fahrerlose Transportsystem 10. Die Steuerungseinrichtung kann, wie hier gezeigt, gesondert von den Scannern vorgesehen sein. Ebenso kann die Steuerungseinrichtung 17 in einen oder in beide Scanner 14, 16 integriert sein.

Während der Bewegung des fahrerlosen Transportsystems 10 werden von dem Scanner 14 und dem Scanner 16 jeweils der Scanbereich 18 bzw. 20 abgescannt. Die laterale Lage von Objekten im Scanbereich ergibt sich in an sich bekannter Weise aus dem Scanvorgang. Die Entfernung eines Objektes im Scanbereich von dem jeweiligen Scanner kann dabei zum Beispiel in an sich bekannter Weise aus der Laufzeit eines Lichtpulses des Scanners bestimmt werden. Auf diese Weise lässt sich der Ort eines Objektes im jeweiligen Scanbereich bestimmen.

Liegen zu einem Objekt im Scanbereich zwei Ortsmessungen zu unterschiedlichen Zeiten vor, kann daraus ein Geschwindigkeitsvektor bestimmt werden. Für den Fall, dass die umgebende Szene keine Mehrdeutigkeiten aufweist, entspricht dieser Geschwindigkeitsvektor in der Regel dem aktuellen tatsächlichen Geschwindigkeitsvektor des fahrerlosen Transportsystems. Die Bestimmung eines Geschwindigkeitsvektors kann zum Beispiel mit dem in DE 10 2005 054 359 A1 beschriebenen Verfahren erfolgen.

Bei einer Ausgestaltung des erfindungsgemäßen Verfahrens werden unter Verwendung einer erfindungsgemäßen Ausführungsform mehrere mögliche Geschwindigkeitsvektoren berücksichtigt. Diese mehreren möglichen Geschwindigkeitsvektoren können sich zum Beispiel dadurch ergeben, dass eine umgebende Szene keine eindeutige Zuordnung der Ortsmessungen zu einem ganz bestimmten Gegenstand erlauben. Dies ist zum Beispiel der Fall, wenn sich das fahrerlose Transportsystem 10 entlang eines langen Ganges ohne charakteristische Merkmale bewegt. In einem solchen Fall ist zwar die Richtung des Geschwindigkeitsvektors, nicht jedoch sein Betrag gut bestimmbar. Aus diesen Mehrdeutigkeiten ergibt sich eine Anzahl von möglichen Geschwindigkeitsvektoren, die mit unterschiedlicher Wahrscheinlichkeit dem aktuellen Geschwindigkeitsvektor entsprechen.

Die Wahrscheinlichkeit eines gemessenen Geschwindigkeitsvektors kann zum Beispiel dadurch abgeschätzt werden, dass mehrere Messungen durchgeführt werden und in an sich bekannter Weise daraus ein wahrscheinlichster Geschwindigkeitsvektor ermittelt wird. Die mehreren Messungen können zum Beispiel durch mehrere Messdurchläufe des den Scanbereich abscannenden Laserstrahls gebildet sein.

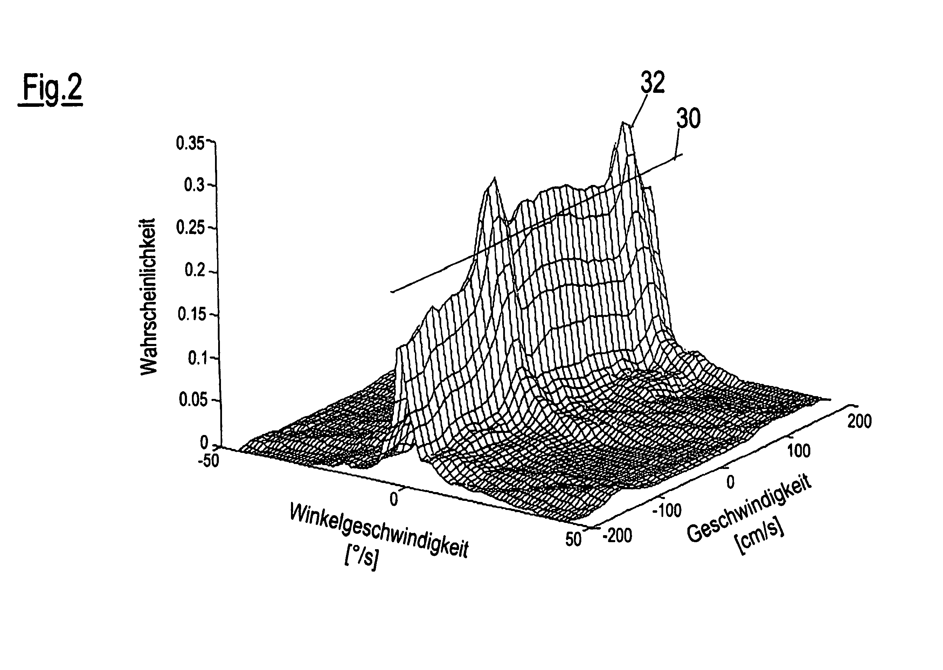

Es ergibt sich ein Wahrscheinlichkeitsprofil im Geschwindigkeitsraum. Für den Fall der Bewegung in einem langen Gang ist ein solches Wahrscheinlichkeitsprofil zum Beispiel in Fig. 2 gezeigt, das die Wahrscheinlichkeiten möglicher Geschwindigkeitsvektoren in einem Raum angibt, der von dem Betrag des Geschwindigkeitsvektors und der Winkelgeschwindigkeit aufgespannt wird. Das Wahrscheinlichkeitsprofil 32, das in Fig. 2 erkennbar ist, ermöglicht offensichtlich eine sehr genaue Angabe der Richtung, die sich im gezeigten Beispiel durch eine Winkelgeschwindigkeit von 0 Grad pro Sekunde auszeichnet. Der Betrag der Geschwindigkeit ist jedoch kaum bestimmbar.

Für den weiteren Prozess verwendet eine Ausführungsform der erfindungsgemäßen Vorrichtung all diejenigen Geschwindigkeitsvektoren, die in dieser Wahrscheinlichkeitsverteilung 32 eine Wahrscheinlichkeit haben, die oberhalb eines Grenzwertes 30 liegt. Zum Beispiel können alle diejenigen Geschwindigkeitsvektoren ausgewählt werden, deren Wahrscheinlichkeit um weniger als einen, zum Beispiel vorgegebenen, Wert im Prozentbereich von der Wahrscheinlichkeit des wahrscheinlichsten Geschwindigkeitsvektors abweicht.

Auf diese Weise wird eine Anzahl von Geschwindigkeitsvektoren bestimmt, die mit einer hohen Wahrscheinlichkeit dem aktuellen Geschwindigkeitsvektor entsprechen.

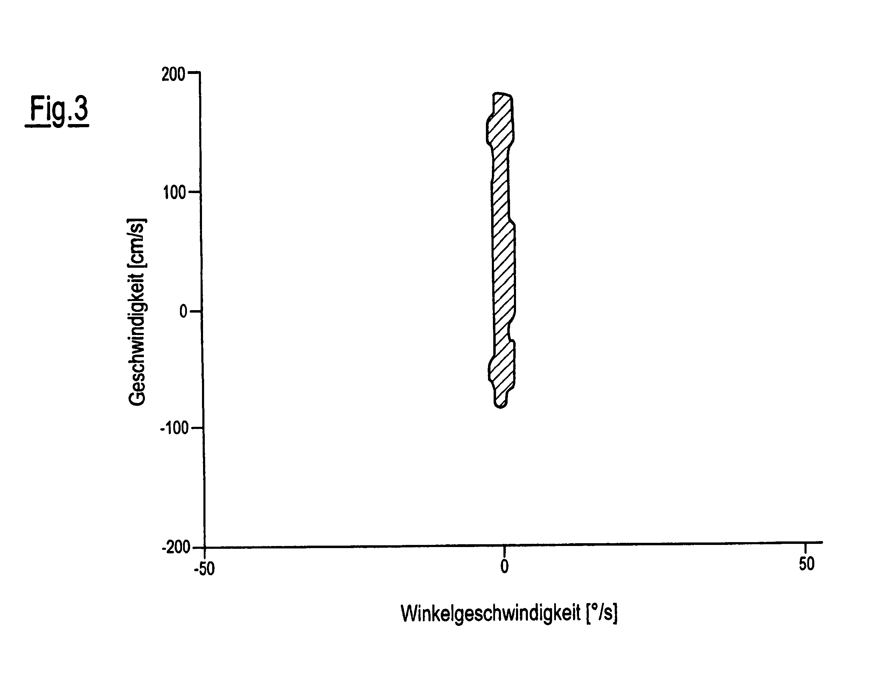

Die ausgewählten Geschwindigkeitsvektoren sind schematisch noch einmal in Fig. 3 dargestellt. Auch hier ist erkennbar, dass die Winkelgeschwindigkeit (als Maß für die Richtung des Geschwindigkeitsvektors) sehr genau festgelegt ist, während der Geschwindigkeitsbetrag nur sehr ungenau festgelegt ist.

Im nächsten Schritt eines erfindungsgemäßen Verfahrens wird mit Hilfe der erfindungsgemäßen Auswahleinheit zu jedem der auf diese Weise bestimmten möglichen Geschwindigkeitsvektoren ein Einzelschutzfeld ausgewählt, das in noch zu beschreibender Weise zu dem jeweiligen Geschwindigkeitsvektor zum Beispiel in einem Speicher der Steuerungseinrichtung 17 des fahrerlosen Transportsystems 10 abgelegt ist.

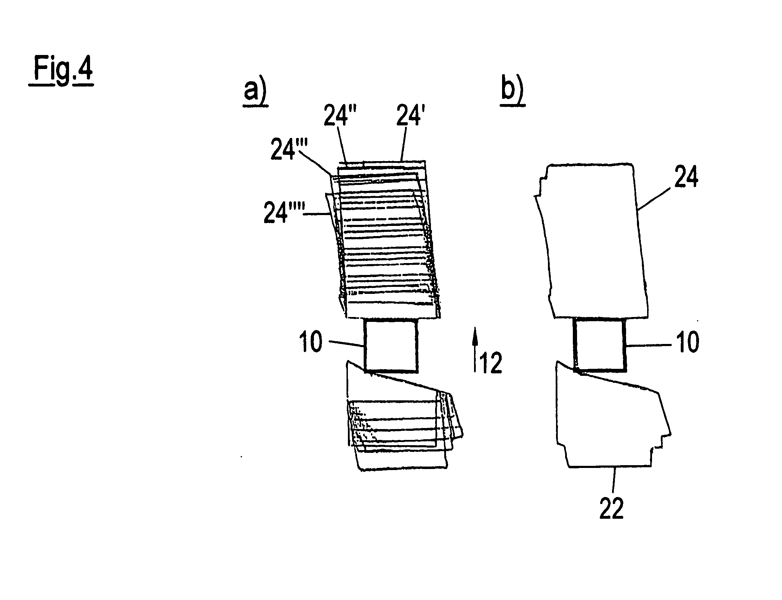

Fig. 4 zeigt, wie eine erfindungsgemäße Vorrichtung das Schutzfeld bildet. Die einzelnen Geschwindigkeitsvektoren, die mit einer gewissen Wahrscheinlichkeit dem aktuellen Geschwindigkeitsvektor entsprechen und wie oben beschrieben ausgewählt worden sind, entsprechen unterschiedlichen Einzelschutzfeldern 24', 24", 24"' und 24"". Die Steuerungseinrichtung 17 bildet aus diesen zu den wahrscheinlichen Geschwindigkeitsvektoren gehörenden Einzelschutzfeldern ein Schutzfeld 24, das deren Einhüllender entspricht.

Die Einzelschutzfelder 24', 24", 24"', 24"" werden aus einem Speicher ausgelesen, der einen Datensatz enthält, in dem zu einzelnen Geschwindigkeitsvektoren passende Einzelschutzfelder abgelegt sind. Die Form und Größe dieser Einzelschutzfelder richtet sich zum Beispiel nach Richtung und Betrag des jeweiligen zugeordneten Geschwindigkeitsvektors in einer Weise, dass ein sicheres Abbremsen des fahrerlosen Transportsystems 10 möglich ist, wenn ein Hindernis in dem jeweiligen Schutzfeld detektiert wird.

Auf dieselbe Art und Weise kann ein Schutzfeld 22 im Rückraum des fahrerlosen Transportsystems gebildet werden. In Fig. 4 ist ein Beispiel gezeigt, bei dem der rückwärtige Scanner schräg nach hinten ausgerichtet ist. Die tatsächliche zu realisierende Anordnung richtet sich nach den aktuellen Anforderungen, die sich zum Beispiel aus dem Betriebsumfeld ergeben.

Bewegt sich das fahrerlose Transportsystem 10 in Richtung 12, wird kontinuierlich der Scanbereich 18 bzw. der Scanbereich 20 von dem jeweiligen Laserscanner 14, 16 überwacht. In beschriebener Weise wird das Schutzfeld 24 bzw. das Schutzfeld 22 dynamisch angepasst. Eine Änderung der Geschwindigkeit bzw. des Geschwindigkeitsvektors führt automatisch zu einer Anpassung der Schutzfeldgeometrie.

Das Schutzfeld wird bei der erfindungsgemäßen Vorrichtung und dem erfindungsgemäßen Verfahren dynamisch festgelegt und berücksichtigt zum Beispiel den Geschwindigkeitsbetrag und die Geschwindigkeitsrichtung, um zum Beispiel einen sicheren Bremsvorgang bei Auftauchen eines Hindernisses zu ermöglichen.

Bewegt sich das fahrerlose Transportsystem 10 auf ein Hindernis zu, so dringt dies zunächst in den Scanbereich 18 ein und wird dort detektiert. Es kann zum Beispiel zur Festlegung des Schutzfeldes 24 mit benutzt werden. Bewegt sich das fahrerlose Transportsystem 10 derart weiter, dass das Schutzfeld 24 das Hindernis berührt, wird zum Beispiel ein Bremssignal erzeugt, das zum Anhalten des fahrerlosen Transportsystems 10 führt.

Bei einer nicht gezeigten Ausführungsform wird das jeweilige Schutzfeld 24 von einem Warnfeld umgeben. Tritt ein Hindernis in dieses Warnfeld ein, wird noch kein Abschaltsignal für das fahrerlose Transportsystem 10 erzeugt, sondern nur ein Warnsignal ausgegeben, das einen Benutzer aufmerksam macht. Das Warnfeld wird dazu größer festgelegt als das entsprechende Schutzfeld.

Bei einer weiteren, nicht gezeigten Ausführungsform können zusätzliche Schutz- oder Warnfelder in beschriebener Weise bestimmt und berücksichtigt werden.

Das beschriebene Beispiel bezieht sich auf die Bewegung eines fahrerlosen Transportsystems 10 entlang eines langen Ganges. Durch die Verwertung nicht nur eines Einzelschutzfeldes sondern der Einhüllenden über mehrere Einzelschutzfelder, die den wahrscheinlichen möglichen Geschwindigkeitsvektoren entsprechen, vergrößert sich das Schutzfeld insbesondere in Bewegungsrichtung. Bewegt sich das fahrerlose Transportsystem in einer Umgebung, die viele gut unterscheidbare Merkmale hat, die zur Geschwindigkeitsvektorbestimmung verwendet werden können, weist die Geschwindigkeitswahrscheinlichkeitsverteilung einen sehr genau definierten Maximalwert auf, sodass die erfindungsgemäße Anwendung mehrerer Geschwindigkeitsvektoren, die mit einer großen Wahrscheinlichkeit dem aktuellen Geschwindigkeitsvektor entsprechen, zu einer kaum merklichen Vergrößerung des Schutzfeldes führt, da die Geschwindigkeitswahrscheinlichkeitsverteilung ein sehr gut definiertes Maximum hat. Insofern bietet die erfindungsgemäße Vorrichtung bzw. das erfindungsgemäße Verfahren in solchen Umgebungen keinen Nachteil gegenüber herkömmlichen Systemen, bei denen jeweils nur ein Schutzfeld verwendet wird, das zu einem Geschwindigkeitsvektor gehört. Andererseits bietet die erfindungsgemäße Vorrichtung bzw. das erfindungsgemäße Verfahren insbesondere bei Umgebungen, die Mehrdeutigkeiten und/oder wenig unterscheidbare Merkmale aufweisen, eine erhöhte Sicherheit.

### Bezugszeichenliste

- 10: fahrerloses Transportsystem
- 12: wesentliche Bewegungsrichtung
- 14: Laserscanner
- 16: Laserscanner
- 17: Steuerungseinrichtung
- 18: vorderer Scanbereich
- 20: hinterer Scanbereich
- 22: hinteres Schutzfeld
- 24: vorderes Schutzfeld
- 24', 24", 24"', 24"": Einzelschutzfeld
- 30: Grenzwert
- 32: Wahrscheinlichkeitsverteilung

## Patentansprüche

1. Vorrichtung zur Sicherheitssteuerung eines Fahrzeuges, insbesondere eines fahrerlosen Fahrzeugs (10), mit
- wenigstens einem optischen Objektsensor (14, 16) zur Detektion von Objekten in einem Schutzfeld (24),
- einer Steuerungseinrichtung (17) zur Auswertung der Signale des wenigstens einen Objektsensors (14, 16) und zur Erzeugung von Steuersignalen für das Fahrzeug (10), insbesondere von Bremssignalen, und
- einer Signalerzeugungseinrichtung zur Erzeugung eines Schaltsignals, wenn in dem Schutzfeld (24) ein Objekt detektiert wird,
**dadurch gekennzeichnet, dass**
die Steuerungseinrichtung (17) folgendes umfasst:
- eine Bestimmungseinheit zur Bestimmung von denjenigen möglichen Geschwindigkeitsvektoren des Fahrzeuges (10), deren Wahrscheinlichkeit, dass sie dem tatsächlichen Geschwindigkeitsvektor entsprechen, größer als ein Grenzwert (30) ist,
- eine Auswahleinheit zur Auswahl derjenigen Einzelschutzfelder (24', 24", 24"', 24""), die den so bestimmten möglichen Geschwindigkeitsvektoren zugeordnet sind, und
- eine Schutzfeldbildungseinheit, die aus den Einzelschutzfeldern (24', 24", 24"', 24"") das Schutzfeld (24) bildet, vorzugsweise durch Bilden der Einhüllenden.

2. Vorrichtung nach Anspruch 1,
bei dem die Steuerungseinrichtung (17) in einem der wenigstens einen Objektsensoren (14, 16) integriert ist.

3. Vorrichtung nach einem der Ansprüche 1 oder 2,
bei dem zu den Geschwindigkeitsvektoren Einzelschutzfelder in einem der Steuerungseinrichtung zugeordneten Speicher abgespeichert sind und aus diesem Speicher mit der Auswahleinheit ausgewählt werden können.

4. Vorrichtung nach einem der Ansprüche 1 bis 3, bei dem der wenigstens eine Objektsensor wenigstens einen ortssensitiven Detektor (14, 16) umfasst und die Ermittlung eines möglichen Geschwindigkeitsvektors die Bildung des Quotienten aus der Differenz zweier Ortsmessungen eines Objektes in dessen Scanbereich (18, 20) und der Zeit zwischen den zwei Ortsmessungen umfasst.

5. Vorrichtung nach Anspruch 4, bei der der wenigstens eine ortssensitive Detektor einen Scanner, vorzugsweise einen Laserscanner umfasst.

6. Vorrichtung nach einem der Ansprüche 1 bis 5, bei der die Bestimmungseinheit derart ausgestaltet ist, dass bei der Bestimmung derjenigen möglichen Geschwindigkeitsvektoren des Fahrzeuges (10), deren Wahrscheinlichkeit größer als ein Grenzwert (30) ist, äußere Zwangsbedingungen berücksichtigt werden, insbesondere wenn die Geschwindigkeiten in zwei Raumrichtungen nicht unabhängig voneinander sind.

7. Vorrichtung nach einem der Ansprüche 1 bis 6, bei der die Bestimmungseinheit derart ausgestaltet ist, dass sie diejenigen Geschwindigkeitsvektoren als mögliche Geschwindigkeitsvektoren bestimmt, deren Wahrscheinlichkeit sich durch weniger als einen Prozentwert von der Wahrscheinlichkeit des wahrscheinlichsten Geschwindigkeitsvektors unterscheidet.

8. Vorrichtung nach einem der Ansprüche 1 bis 7, bei der die Steuerungseinrichtung (17) eine zweite Auswahleinheit zur Auswahl von Einzelwarnfeldern, die den möglichen Geschwindigkeitsvektoren zugeordnet sind, eine Warnfeldbildungseinheit, die aus den Einzelwarnfeldern ein Warnfeld bildet, vorzugsweise durch Bilden der Einhüllenden, und eine Warnsignalerzeugungseinrichtung zur Erzeugung eines Warnsignals, wenn in dem Warnfeld ein Objekt detektiert wird, umfasst.

9. Fahrzeug mit einer Vorrichtung zur Sicherheitssteuerung des Fahrzeuges (10) gemäß einem der Ansprüche 1 bis 8.

10. Fahrzeug nach Anspruch 9, bei dem sich das Schutzfeld (24) zumindest vor dem Fahrzeug erstreckt.

11. Verfahren zur Sicherheitssteuerung eines Fahrzeuges, insbesondere eines fahrerlosen Fahrzeuges (10), insbesondere unter Verwendung einer Vorrichtung nach einem der Ansprüche 1 bis 8, bei dem
- diejenigen Geschwindigkeitsvektoren als mögliche Geschwindigkeitsvektoren bestimmt werden, deren Wahrscheinlichkeit, dass sie dem tatsächlichen Geschwindigkeitsvektor entsprechen, größer als ein Grenzwert (30) ist,
- diejenigen Einzelschutzfelder (24', 24", 24"', 24"") aus einer Anzahl von Einzelschutzfeldern ausgewählt werden, die den möglichen Geschwindigkeitsvektoren zugeordnet sind,
- ein Schutzfeld (24) aus den Einzelschutzfeldern (24', 24", 24"', 24"") zusammengestellt wird, vorzugsweise als deren Einhüllende, und
- ein Schaltsignal, insbesondere ein Bremssignal, erzeugt wird, wenn in dem so gebildeten Schutzfeld (24) ein Objekt detektiert wird.

## Claims

1. An apparatus for the safety control of a vehicle, in particular of a driverless vehicle (10), comprising
- at least one optical object sensor (14, 16) for detecting objects in a protected field (24);
- a control device (17) for evaluating the signals of the at least one object sensor (14, 16) and for generating control signals for the vehicle (10), in particular brake signals; and
- a signal generation device for generating a switch signal when an object is detected in the protected field (24),
**characterised in that**
the control device (17) comprises the following:
- a determining unit for determining those possible velocity vectors of the vehicle (10) whose probability that they correspond to the actual velocity vector is larger than a limit value (30);
- a selection unit for selecting those individual protected fields (24', 24", 24"', 24"") which are associated with the thus determined possible velocity vectors; and
- a protected field forming unit which forms the protected field (24) from the individual protected fields (24', 24", 24"', 24""), preferably by forming the envelope.

2. An apparatus in accordance with claim 1,
wherein the control device (17) is integrated in one of the at least one object sensors (14, 16).

3. An apparatus in accordance with one of the claims 1 or 2,
wherein individual protected fields with regard to the velocity vectors are stored in a memory associated with the control device and can be selected from this memory using the selection unit.

4. An apparatus in accordance with any one of the claims 1 to 3,
wherein the at least one object sensor includes a position-sensitive detector (14, 16) and the determination of a possible velocity vector includes the formation of the quotient from the difference of two position measurements of an object in its scan region (18, 20) and the time between the two position measurements.

5. An apparatus in accordance with claim 4, wherein the at least one position-sensitive detector includes a scanner, preferably a laser scanner.

6. An apparatus in accordance with any one of the claims 1 to 5,
wherein the determination unit is designed so that, on the determination of those possible velocity vectors of the vehicle (10) whose probability is larger than a limit value (30), external constraints are taken into account, in particular when the velocities in two spatial directions are not independent of one another.

7. An apparatus in accordance with any one of the claims 1 to 6,
wherein the determination unit is designed so that it determines those velocity vectors as possible velocity vectors whose probability differs by less than one percentage point from the probability of the most probable velocity vector.

8. An apparatus in accordance with any one of the claims 1 to 7,
wherein the control device (17) includes a second selection unit for selecting individual warning fields associated with the possible velocity vectors, a warning field formation unit which forms a warning field from the individual warning fields, preferably by forming the envelope, and a warning signal generation device for generating a warning signal when an object is detected in the warning field.

9. A vehicle having an apparatus for the safety control of the vehicle (10) in accordance with any one of the claims 1 to 8.

10. A vehicle in accordance with claim 9, wherein the protected field (24) extends at least in front of the vehicle.

11. A method for the safety control of a vehicle, in particular of a driverless vehicle (10), in particular using an apparatus in accordance with any one of the claims 1 to 8, wherein
- those velocity vectors are determined as possible velocity vectors whose probability that they correspond to the actual velocity vector is larger than a limit value (30);
- those individual protected fields (24', 24", 24"', 24"") are selected from a plurality of individual protected fields which are associated with the possible velocity vectors;
- a protected field (24) is assembled from the individual protected fields (24', 24", 24"', 24""), preferably as their envelope; and
- a switch signal, in particular a brake signal, is generated when an object is detected in the protected field (24) thus formed.

## Revendications

1. Dispositif pour la commande de sécurité d'un véhicule, en particulier d'un véhicule sans conducteur (10), comprenant
- au moins un détecteur d'objets optique (14, 16) pour la détection d'objets dans un champ protégé (24),
- un système de commande (17) pour évaluer les signaux dudit au moins un détecteur d'objets (14, 16) et pour engendrer des signaux de commande pour le véhicule (10), en particulier des signaux de freinage, et
- un système de génération de signaux pour générer un signal de commutation quand un objet est détecté dans le champ protégé (24), **caractérisé en ce que**
le système de commande (17) comprend les unités suivantes :
- une unité de détermination pour déterminer ceux des vecteurs vitesse possibles du véhicule (10) pour lesquels la probabilité qu'ils correspondent au vecteur vitesse réel est supérieure à une valeur limite (30),
- une unité de sélection pour sélectionner ceux des champs protégés individuels (24', 24", 24"', 24"") qui sont associés aux vecteurs vitesse possibles ainsi déterminés, et
- une unité de formation de champ protégé qui forme le champ protégé (24) à partir des champs protégés individuels (24', 24", 24"', 24""), de préférence par formation de l'enveloppe.

2. Dispositif selon la revendication 1,
dans lequel le système de commande (17) est intégré dans l'un desdits au moins un détecteur d'objets (14, 16).

3. Dispositif selon l'une des revendications 1 2,
dans lequel des champs protégés individuels appartenant aux vecteurs vitesse sont mémorisés dans une mémoire associée au système de commande et peuvent être sélectionnés avec l'unité de sélection depuis cette mémoire.

4. Dispositif selon l'une des revendications 1 à 3, dans lequel ledit au moins un détecteur d'objets comprend au moins un détecteur à sensibilité locale (14, 16), et la détermination d'un vecteur vitesse possible comprend la formation du quotient de la différence de deux mesures locales d'un objet dans sa zone de balayage (18, 20) sur le temps entre deux mesures locales.

5. Dispositif selon la revendication 4, dans lequel ledit au moins un détecteur à sensibilité locale comprend un scanner, de préférence un scanner à laser.

6. Dispositif selon l'une des revendications 1 à 5, dans lequel l'unité de détermination est conçue de telle façon que lors de la détermination de celles des vitesses possibles du véhicule (10) dont la probabilité est supérieure à une valeur limite (30), des conditions obligatoires extérieures sont prises en compte, en particulier quand les vitesses dans deux directions dans l'espace ne sont pas indépendantes l'une de l'autre.

7. Dispositif selon l'une des revendications 1 à 6, dans lequel l'unité de détermination est conçue de telle façon qu'elle détermine comme vecteurs vitesse possibles ceux des vecteurs vitesse dont la probabilité diffère de la probabilité du vecteur vitesse le plus probable d'une valeur inférieure à 1 %.

8. Dispositif selon l'une des revendications 1 à 7, dans lequel le système de commande (17) comprend une seconde unité de sélection pour sélectionner des champs d'avertissement individuels qui sont associés aux vecteurs vitesse possibles, une unité de formation de champ d'avertissement qui forme un champ d'avertissement à partir des champs d'avertissement individuels, de préférence par formation de l'enveloppe, et un système de génération de signal d'avertissement pour générer un signal d'avertissement quand un objet est détecté dans le champ d'avertissement.

9. Véhicule comprenant un dispositif pour la commande de sécurité du véhicule (10) selon l'une des revendications 1 à 8.

10. Véhicule selon la revendication 9, dans lequel le champ protégé (24) s'étend au moins devant le véhicule.

11. Procédé pour la commande de sécurité d'un véhicule, en particulier d'un véhicule sans conducteur (10), en particulier en utilisant un dispositif selon l'une des revendications 1 à 8, dans lequel
- on détermine comme vecteurs vitesse possibles ceux des vecteurs vitesse pour lesquels la probabilité qu'ils correspondent au vecteur vitesse réel est supérieure à une valeur limite (30),
- on sélectionne à partir d'un certain nombre de champs protégés individuels ceux des champs protégés individuels (24', 24", 24"', 24"") qui sont associés aux vecteurs vitesse possibles,
- on compose un champ protégé (24) à partir des champs protégés individuels (24', 24", 24"', 24""), de préférence comme leur enveloppe,
et
- on engendre un signal de commutation, en particulier un signal de freinage quand un objet est détecté dans le champ protégé (24) ainsi formé.
